# EUROPEAN PATENT APPLICATION

(11) **EP 2 784 642 A1**
(43) Date of publication of application: **01.10.2014**
(21) Application number: 13768788.5
(22) Date of filing: 27.03.2013
(51) Int. Cl.: G06F 3/048

(54) **DESKTOP CONTAINER SWITCHING CONTROL METHOD AND TERMINAL**

(30) Priority: 29.03.2012 CN 201210087950
(71) Applicant: Huawei Device Co., Ltd., Shenzhen, Guangdong 518129 (CN)
(72) Inventor: YANG, Lin, Shenzhen, Guangdong 518129 (CN); LI, Kunpeng, Shenzhen, Guangdong 518129 (CN); LI, Gang, Shenzhen, Guangdong 518129 (CN)
(74) Representative: Körber, Martin Hans
(86) International application number: PCT/CN2013/073238
(87) International publication number: WO 2013/143454

(57) **Abstract**

Embodiments of the present invention disclose a method and a terminal for controlling switching of a desktop container, which are used to replace a conventional operation of moving a component based on a touch operation on an intelligent terminal. The method according to the embodiments of the present invention includes: obtaining, by a terminal, movement determination information when a component-based moving event is activated; identifying, by the terminal, a movement state of the terminal according to the movement determination information; and switching, by the terminal, a currently displayed desktop container page according to the movement state, and moving a component, on which the moving event is based, to a desktop container page displayed after the switching. After the solutions of the present invention are implemented, hand fatigue of a user caused by touching and holding a component and dragging the component can be avoided, particularly for a user accustomed to operating a big-screen terminal with one hand, and a risk of terminal falling is reduced, thereby improving operation experience of the user.

## Description

This application claims priority to Chinese Patent Application No. CN201210087950.3, filed with the Chinese Patent Office on March 29, 2012 and entitled "METHOD AND TERMINAL FOR CONTROLLING SWITCHING OF DESKTOP CONTAINER", which is incorporated herein by reference in its entirety.

### TECHNICAL FIELD

The present invention relates to the field of terminal technologies, and in particular, to a method and a terminal for controlling switching of a desktop container.

### BACKGROUND

An intelligent terminal OS (Operating System, operating system) includes a desktop container, and the desktop container is used to place a component. The desktop container may include a plurality of pages. When the desktop container is accessed, the first page is displayed first. The first page of the desktop container is also referred to as a main page of the desktop container. Other pages are arranged sequentially as the second page, the third page and the like. An all-touch terminal provides no physical navigation key and uses a screen gesture based on a touch operation to replace some operation keys. A user switches a page to a previous page by flicking to the right on a touchscreen, and switches to a next page by flicking to the left.

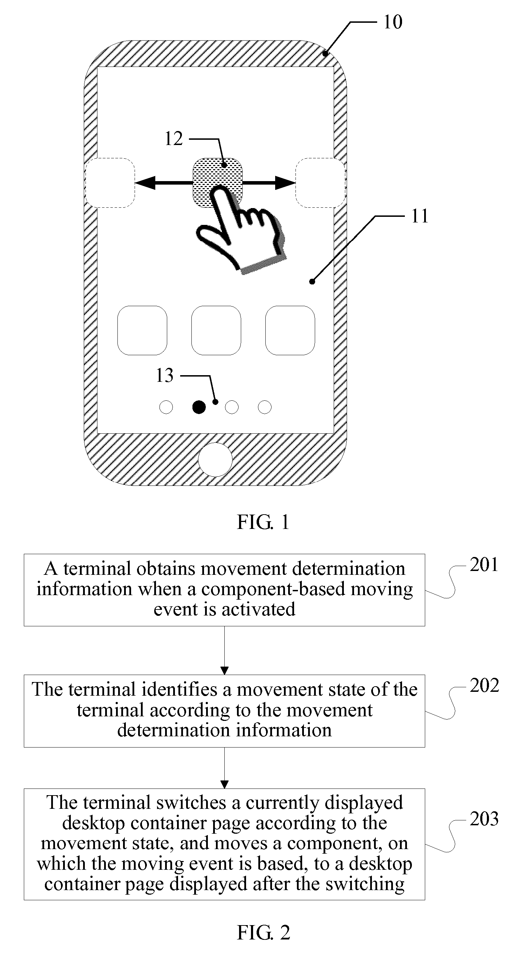

Currently, when the user needs to move a certain component from a current page to another page, the user touches and holds the component on the current page; after an operation of moving the component is triggered, drags the component to a left edge or a right edge of the current page, so that the page of the desktop container switches to a previous page or switches to a next page; and releases the component being touched and held until the page is switched to a target page. Referring to FIG. 1, a terminal 10 includes a desktop container 11, a component 12 and a page divider 13, where four circles of the page divider 13 represent four pages corresponding to the desktop container 11. A user touches and holds the component 12 and drags the component 12 to a left edge or a right edge of a current page, so as to move the component 12 to a previous page or a next page of the current page.

However, for a user accustomed to operating a big-screen terminal with one hand, the operation of moving a component based on a touch operation, namely, touching and holding the component and dragging the component, brings a high pressure to a thumb and easily causes hand fatigue of the user. In addition, the thumb needs to flick on a big screen, which is not conducive to holding the terminal tightly and increases a risk of terminal falling. The foregoing two facts degrade operation experience of the user.

### SUMMARY

To solve the foregoing problems, embodiments of the present invention provide a method and a terminal for controlling switching of a desktop container, which are used to replace a conventional operation of moving a component based on a touch operation on an intelligent terminal. After solutions of the present invention are implemented, hand fatigue of a user caused by touching and holding a component and dragging the component can be avoided, particularly for a user accustomed to operating a big-screen terminal with one hand, and a risk of terminal falling is reduced, thereby improving operation experience of the user.

A method for controlling switching of a desktop container includes:
obtaining, by a terminal, movement determination information when a component-based moving event is activated; identifying, by the terminal, a movement state of the terminal according to the movement determination information; and switching, by the terminal, a currently displayed desktop container page according to the movement state, and moving a component, on which the moving event is based, to a desktop container page displayed after the switching.

A terminal includes:
a movement determination information obtaining unit, configured to obtain movement determination information of the terminal when a component-based moving event is activated; a movement state identifying unit, configured to identify a movement state of the terminal according to the movement determination information; and a page switching unit, configured to switch a currently displayed desktop container page according to the movement state, and move a component, on which the moving event is based, to a desktop container page displayed after the switching.

It can be known from the foregoing technical solutions that the embodiments of the present invention have the following advantages:

A terminal starts to obtain movement determination information after a component-based moving event is activated, identifies a movement state of the terminal according to the movement determination information, and switches a page according to the movement state, which, in place of a screen gesture based on a touch operation, also implement a function of moving a component to another page. Without a need to touch and hold the component and drag the component, this method avoids hand fatigue of a user, is conductive to holding the terminal tightly, and reduces a risk of terminal falling, thereby improving operation experience of the user.

### BRIEF DESCRIPTION OF DRAWINGS

FIG. 1 is a schematic diagram of moving a component to another page in the prior art;
FIG. 2 is a flowchart of a method for controlling switching of a desktop container according to a first embodiment of the present invention;
FIG. 3 is a flowchart of a method for controlling switching of a desktop container according to a second embodiment of the present invention;
FIG. 4 is a schematic diagram of moving a component to another page according to the present invention;
FIG. 5 is a structural diagram of a related terminal of a method for controlling switching of a desktop container according to a third embodiment of the present invention; and
FIG. 6 is a structural diagram of a related terminal of a method for controlling switching of a desktop container according to a fourth embodiment of the present invention.

### DESCRIPTION OF EMBODIMENTS

The following clearly and completely describes the technical solutions in the present invention with reference to the accompanying drawings of the specification in the present invention. Apparently, the embodiments to be described are merely a part rather than all of the embodiments of the present invention. All other embodiments obtained by a person of ordinary skill in the art based on the embodiments of the present invention without creative efforts shall fall within the protection scope of the present invention.

The embodiments of the present invention provide a method for controlling switching of a desktop container, which is used to replace a conventional operation of moving a component based on a touch operation on an intelligent terminal. After the solution of the present invention is implemented, hand fatigue of a user can be avoided, particularly for a user accustomed to operating a big-screen terminal with one hand. In addition, the present invention is conductive to holding the terminal tightly, and reduces a risk of terminal falling, thereby improving operation experience of the user. The embodiments of the present invention further provide a terminal corresponding to the method. The method and the terminal are separately described in detail below.

In a first embodiment of the present invention, a method for controlling switching of a desktop container is described in detail. FIG. 2 shows a specific process of the method for controlling switching, which includes the following steps:

201: A terminal obtains movement determination information when a component-based moving event is activated.

It is assumed that the terminal is displaying a page of the desktop container, and at least one component exists on the page. If a user wants to move any component from the current page to another page of the desktop container, a component-based moving event needs to be activated first.

In this step, the user actively activates the component-based moving event. In the component-based moving event, the component which the user wants to move to another page is referred to as a target component. In this embodiment, an activation manner of the moving event is not limited specifically, but a preferred solution is provided in subsequent embodiments.

When the component-based moving event is activated, the terminal obtains the movement determination information, where the movement determination information is used to identify a movement state of the terminal. The movement state refers to a movement based on a dynamic movement of a terminal body, and is different from a screen gesture based on a touch operation.

202: The terminal identifies a movement state of the terminal according to the movement determination information.

In this step, the terminal is capable of identifying the movement state of the terminal by performing identification analysis on the movement state according to the movement determination information obtained in step 201. The movement state obtained by means of identification is used to control switching of a desktop container page, and a function of the movement state is similar to that of a screen gesture identified by a touchscreen. For related descriptions, reference may be made to related information in the background.

A principle of identifying a movement state of a terminal is: comprehensively identifying the movement state of the terminal by using data sent by sensors, where the data sent by the sensors mentioned herein is the movement determination information described in this embodiment. For example, an acceleration sensor can be used to identify whether a movement of the terminal is stationary or an accelerated movement, or the like; a gravity sensor can be used to identify whether the terminal is placed in landscape mode or portrait mode; and a gyroscope sensor can be used to identify a tilting angle of the terminal in all directions in a three-dimensional space. In this embodiment, a type of the movement state and a used sensor are not specifically limited, but a preferred solution is provided in subsequent embodiments.

203: The terminal switches a currently displayed desktop container page according to the movement state, and moves the component in the moving event to a desktop container page displayed after the switching.

In this step, the terminal switches the currently displayed desktop container page according to the movement state identified in step 202. The switching includes switching to an adjacent page in a preset direction and switching to an adjacent page in a direction opposite to the preset direction. For example, specifically, it may be switching to a previous page and switching to a next page, and each movement state corresponds to switching to a page.

After the user switches the desktop container page to a target page, the terminal moves the target component in the moving event to the desktop container target page displayed after the switching.

In this embodiment, a terminal starts to obtain movement determination information after a component-based moving event is activated, identifies a movement state of the terminal according to the movement determination information, and switches a page according to the movement state, which, in place of a screen gesture based on a touch operation, also implement a function of moving a component to another page. Without a need to touch and hold the component and drag the component, this method avoids hand fatigue of a user, is conductive to holding the terminal tightly, and reduces a risk of terminal falling, thereby improving operation experience of the user.

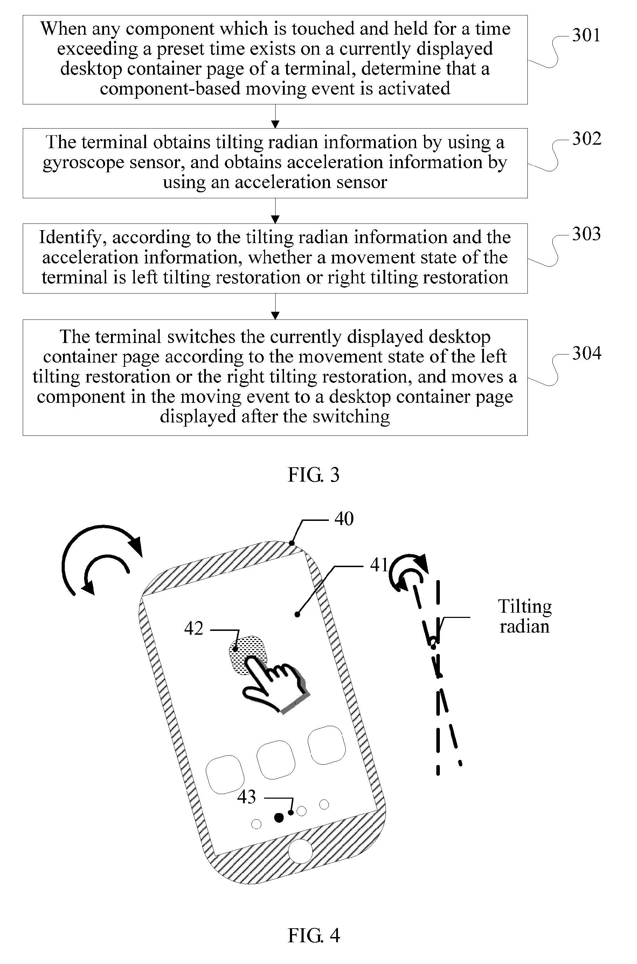

In a second embodiment of the present invention, a supplementary explanation of the method for controlling switching of a desktop container described in the first embodiment is given. FIG. 3 shows a specific process of the method for controlling switching described in this embodiment, which includes the following steps:

301: When any component which is touched and held for a time exceeding a preset time exists on a currently displayed desktop container page of a terminal, determine that a component-based moving event is activated.

It is assumed that the terminal is displaying a page of the desktop container, and at least one component exists on the page. If a user wants to move any component from the current page to another page of the desktop container, a component-based moving event needs to be activated first.

In this step, the user actively activates the component-based moving event. The component which is in the component-based moving event and needs to be moved to another page by the user is referred to as a target component.

Preferably, an activation manner of the moving event may further be: when any component which is double-tapped exists on the currently displayed desktop container of the terminal, determining that the component-based moving event is activated. Obviously, the activation manner of the moving event is not limited to the two manners provided in this embodiment.

302: The terminal obtains tilting radian information by using a gyroscope sensor, and obtains acceleration information by using an acceleration sensor.

The terminal obtains movement determination information when the component-based moving event is activated. It has been mentioned in the first embodiment of the present invention that the movement determination information is used to identify a movement state of the terminal, where the movement state refers to a movement based on a dynamic movement of a terminal body, and is different from a screen gesture based on a touch operation.

The movement determination information includes the tilting radian information and the acceleration information, where the tilting radian information is used to determine a current tilting radian of the terminal, and the acceleration information is used to correct the tilting radian information. The two are obtained separately by using the gyroscope sensor and the acceleration sensor of the terminal.

In the prior art, the gyroscope sensor includes three axes: x, y, and z. Output data of the gyroscope sensor is a value of an angular velocity rotating around the three axes. When the terminal is placed in portrait mode, a direction of the portrait mode is a direction of the y axis of the gyroscope sensor. When the terminal tilts to the left or to the right and restores, the gyroscope sensor may integrate the angular velocity rotating around the y axis over time to obtain angular displacement when the terminal tilts to the left or tilts to the right. The angular displacement refers to a radian when the terminal tilts to the left or to the right when the terminal is placed in portrait mode. Therefore, the movement state of the left tilting and the right tilting when the terminal is placed in portrait mode can be identified by using the characteristic of the gyroscope sensor.

In addition, because there is no absolute reference coordinate system when the gyroscope sensor works, an integration operation of the gyroscope sensor may accumulate an error, and error accumulation for a long time may cause inaccurate data read by the terminal. Therefore, in the prior art, the acceleration sensor is usually used to correct the gyroscope sensor, that is, acceleration information obtained by the acceleration sensor is used to correct tilting radian information obtained by the gyroscope sensor.

A principle of the acceleration sensor correcting the gyroscope sensor is specifically as follows:

The gyroscope sensor is used to detect an angular acceleration, and therefore, when the gyroscope sensor is stationary, in theory, the gyroscope sensor has no output. However, in a practical application, a drifting phenomenon is prone to occur for the gyroscope sensor, that is, when the gyroscope sensor is stationary, the gyroscope sensor still has an output. However, the acceleration sensor is stable, and no drifting phenomenon occurs. Assuming that the terminal is stationary, it can be correctly detected by using the acceleration sensor that the terminal is stationary. In this case, if the gyroscope sensor has an output, it indicates that a drifting phenomenon occurs for the gyroscope sensor. In this case, a value output by the gyroscope sensor is a drift value, and may be used for correction calculation of an error in calculation.

303: Identify whether the movement state of the terminal is left tilting restoration or right tilting restoration according to the tilting radian information and the acceleration information.

In this step, the terminal is capable of identifying the movement state of the terminal by performing identification analysis on the movement state according to the tilting radian information and the acceleration information obtained in step 302, where the movement state of the terminal includes the left tilting restoration and the right tilting restoration. The movement state obtained by means of identification is used to control switching of a desktop container page, and a function of the movement state is similar to that of a screen gesture identified by a touchscreen. For related descriptions, reference may be made to related information in the background.

A principle of identifying the left tilting restoration or the right tilting restoration of the terminal is specifically as follows:

When the terminal is placed in portrait mode initially, the tilting radian information obtained in step 302 is used to determine a current left tilting radian or right tilting radian of the terminal. When the tilting radian exceeds a preset value, whether a duration of the current left tilting or right tilting is smaller than a preset value is also determined. If yes, it is determined that a current movement state of the terminal is left tilting restoration or right tilting restoration. The preset values may be adjusted according to a practical condition, and represent sensitivity of identifying the movement state. Referring to FIG. 4, a specific example of determining the movement state is:

A terminal 40 includes a desktop container 41, a component 42, and a page divider 43, where four circles of the page divider 43 represent four pages corresponding to the desktop container 41. At a time of T, a user touches and holds the component 42 and tilts the terminal to the left. A maximum value of a tilting angle of the left tilting is 17 degrees. After a certain period of time, for example, after 1 second, the terminal is recovered to a placement state in portrait mode. It is assumed a preset value for tilting radian determination is 15 degrees and a preset value for duration determination is 2 seconds. Because the left tilting radian of the current movement state is 17 degrees and the duration of the tilting is 1 second, it can be determined that the current movement state of the terminal is the left tilting restoration. Therefore, the terminal moves the component 12 to a next page of the current page of the desktop container 41.

304: The terminal switches the currently displayed desktop container page according to the identified movement state of the left tilting restoration or the right tilting restoration, and moves the component in the moving event to a desktop container page displayed after the switching.

In this step, that the terminal switches the currently displayed desktop container page according to the movement state of the left tilting restoration or the right tilting restoration identified in step 303 is specifically that:

In this step, when the movement state of the terminal is the left tilting restoration, the currently displayed desktop container page of the terminal is switched to an adjacent page in a preset direction, and specifically it may be switching to a previous page; and when the movement state of the terminal is the right tilting restoration, the currently displayed desktop container page of the terminal is switched to an adjacent page in a direction opposite to the preset direction, and specifically it may be switching to a next page.

After the user switches the desktop container page to a target page, the terminal moves the target component in the moving event to the desktop container target page displayed after the switching.

In this embodiment, when any component which is touched and held for a time exceeding a preset time exists on a page, a terminal starts to obtain tilting radian information and acceleration information, identifies whether a movement state of the terminal is left tilting restoration or right tilting restoration according to the tilting radian information and the acceleration information, and switches the page according to the left tilting restoration or the right tilting restoration, which, in place of a screen gesture based on a touch operation, also implement a function of moving a component to another page. Without a need to touch and hold the component and drag the component, this method avoids hand fatigue of a user, is conductive to holding the terminal tightly, and reduces a risk of terminal falling, thereby improving operation experience of the user.

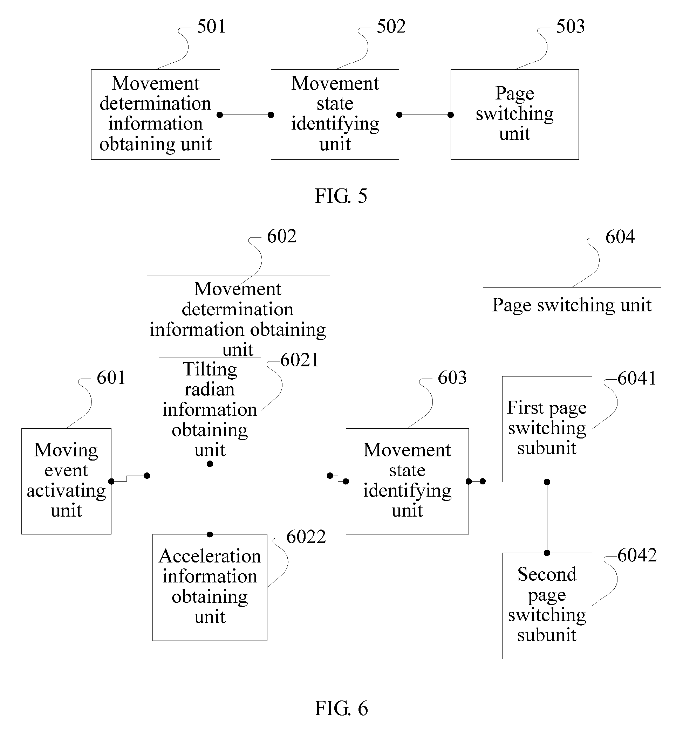

In a third embodiment of the present invention, a terminal corresponding to the method provided in the first embodiment is described in detail. The terminal includes one or more units configured to implement one or more steps in the foregoing method. Therefore, descriptions of all steps in the method are applicable to corresponding units of the terminal. FIG. 5 shows a specific structure of the terminal in this embodiment, which includes:

A movement determination information obtaining unit 501 is configured to obtain movement determination information of the terminal when a component-based moving event is activated.

It is assumed that the terminal is displaying a page of the desktop container, and at least one component exists on the page. If a user wants to move any component from the current page to another page of the desktop container, a component-based moving event needs to be activated first.

The user actively activates the component-based moving event. The component which is in the component-based moving event and needs to be moved to another page by the user is referred to as a target component. In this embodiment, an activation manner of the moving event is not limited specifically, but a preferred solution is provided in subsequent embodiments.

When the component-based moving event is activated, the movement determination information obtaining unit 501 obtains the movement determination information, where the movement determination information is used to identify a movement state of the terminal. The movement state refers to a movement based on a dynamic movement of a terminal body, and is different from a screen gesture based on a touch operation.

A movement state identifying unit 502, in communication connection with the movement determination information obtaining unit 501, is configured to identify a movement state of the terminal according to the movement determination information.

The movement state identifying unit 502 is capable of identifying the movement state of the terminal by performing identification analysis on the movement state according to the movement determination information obtained by the movement determination information obtaining unit 501. The movement state obtained by means of identification is used to control switching of a desktop container page, and a function of the movement state is similar to that of a screen gesture identified by a touchscreen. For related descriptions, reference may be made to related information in the background.

A principle of identifying the movement state of the terminal by the movement state identifying unit 502 is: comprehensively identifying the movement state of the terminal by using data sent by sensors, where the data sent by the sensors mentioned herein is the movement determination information described in this embodiment. For example, an acceleration sensor can be used to identify whether a movement of the terminal is stationary or an accelerated movement, or the like; a gravity sensor can be used to identify whether the terminal is placed in landscape mode or portrait mode; and a gyroscope sensor can be used to identify a tilting angle of the terminal in all directions in a three-dimensional space. In this embodiment, a type of the movement state and a used sensor are not specifically limited, but a preferred solution is provided in subsequent embodiments.

A page switching unit 503, in communication connection with the movement state identifying unit 502, is configured to switch a currently displayed desktop container page according to the movement state, and move the component in the moving event to a desktop container page displayed after the switching.

The page switching unit 503 switches the currently displayed desktop container page according to the movement state identified by the movement state identifying unit 502. The switching includes switching to an adjacent page in a preset direction and switching to an adjacent page in a direction opposite to the preset direction, which may specifically be switching to a previous page and switching to a next page, and each movement state corresponds to switching to a page.

In this embodiment, the movement determination information obtaining unit 501 starts to obtain movement determination information after a component-based moving event is activated, the movement state identifying unit 502 identifies a movement state of the terminal according to the movement determination information, and the page switching unit 503 switches a page and moves the component according to the movement state, which, in place of a screen gesture based on a touch operation, also implement a function of moving a component to another page. Without a need to touch and hold the component and drag the component, this method avoids hand fatigue of a user, is conductive to holding the terminal tightly, and reduces a risk of terminal falling, thereby improving operation experience of the user.

In a fourth embodiment of the present invention, a supplementary explanation of the terminal provided in the third embodiment is given. The terminal in this embodiment includes one or more units configured to implement one or more steps in the foregoing method. Therefore, descriptions of all steps in the method are applicable to corresponding units of the terminal. FIG. 6 shows a specific structure of the terminal in this embodiment, which includes:

A moving event activating unit 601 is configured to: when any component which is touched and held for a time exceeding a preset time exists on a currently displayed desktop container page of the terminal, determine that a component-based moving event is activated.

It is assumed that the terminal is displaying a page of the desktop container, and at least one component exists on the page. If a user wants to move any component from the current page to another page of the desktop container, a component-based moving event needs to be activated first.

The user actively activates the component-based moving event, and the moving event activating unit 601 determines the event. The component which is in the component-based moving event and needs to be moved to another page by the user is referred to as a target component.

Preferably, the moving event activating unit 601 may further be configured to: when any component which is double-tapped exists on the currently displayed desktop container of the terminal, determine that the component-based moving event is activated. Obviously, an activation manner of the moving event is not limited to the two manners provided in this embodiment.

A movement determination information obtaining unit 602, in communication connection with the moving event activating unit 601, is configured to obtain movement determination information of the terminal when the component-based moving event is activated.

The movement determination information obtaining unit 602 further includes: a tilting radian information obtaining unit 6021 and an acceleration information obtaining unit 6022.

The terminal obtains the movement determination information when the component-based moving event is activated. It has been mentioned in the third embodiment of the present invention that the movement determination information is used to identify a movement state of the terminal. The movement state refers to a movement based on a dynamic movement of a terminal body, and is different from a screen gesture based on a touch operation.

The movement determination information includes the tilting radian information and the acceleration information, where the tilting radian information is used to determine a current tilting radian of the terminal, and the acceleration information is used to correct the tilting radian information. The two are obtained separately by the tilting radian information obtaining unit 6021 and the acceleration information obtaining unit 6022 of the terminal.

The tilting radian information obtaining unit 6021 is configured to obtain the tilting radian information by using a gyroscope sensor, where the tilting radian information is used to determine the current tilting radian of the terminal.

The acceleration information obtaining unit 6022, in communication connection with the tilting radian information obtaining unit 6021, is configured to obtain the acceleration information by using an acceleration sensor, where the acceleration information is used to correct the tilting radian information.

For operation principles of the gyroscope sensor and the acceleration sensor in the prior art, reference may be made to related information in step 302 in the second embodiment of the present invention, and details are not repeated herein.

A movement state identifying unit 603, in communication connection with the movement determination information obtaining unit 602, is configured to identify, according to the tilting radian information and the acceleration information, whether the movement state of the terminal is left tilting restoration or right tilting restoration.

The movement state identifying unit 603 is capable of identifying the movement state of the terminal by performing identification analysis on the movement state according to the tilting radian information and the acceleration information obtained by the movement determination information obtaining unit 602. The movement state of the terminal includes the left tilting restoration and the right tilting restoration. The movement state obtained by means of identification is used to control switching of a desktop container page, and a function of the movement state is similar to that of a screen gesture identified by a touchscreen. For related descriptions, reference may be made to related information in the background.

In addition, for a principle of identifying the movement state of the left tilting restoration or the right tilting restoration of the terminal, reference may be made to related information in step 303 in the second embodiment of the present invention, and details are not repeated herein.

A page switching unit 604, in communication connection with the movement state identifying unit 603, is configured to switch a currently displayed desktop container page according to the movement state, and move the component on which the moving event is based to a desktop container page displayed after the switching. The page switching unit 604 further includes:
a first page switching subunit 6041, configured to: when the movement state of the terminal is the left tilting restoration, switch the currently displayed desktop container page of the terminal to an adjacent page in a preset direction, where the switching may specifically be switching to a previous page; and
a second page switching subunit 6042, configured to: when the movement state of the terminal is the right tilting restoration, switch the currently displayed desktop container page of the terminal to an adjacent page in a direction opposite to the preset direction, where the switching may specifically be switching to a next page.

In this embodiment, when the moving event activating unit 601 determines that any component which is touched and held for a time exceeding a preset time exists on a page, the movement determination information obtaining unit 602 starts to obtain tilting radian information and acceleration information, the movement state identifying unit 603 identifies, according to the tilting radian information and the acceleration information, whether a movement state of the terminal is left tilting restoration or right tilting restoration, and the page switching unit 604 switches the page according to the left tilting restoration or the right tilting restoration, which, in place of a screen gesture based on a touch operation, also implement a function of moving a component to another page. Without a need to touch and hold the component and drag the component, this method avoids hand fatigue of a user, is conductive to holding the terminal tightly, and reduces a risk of terminal falling, thereby improving operation experience of the user.

A person of ordinary skill in the art may understand that all or a part of the steps of the methods in the embodiments may be implemented by a program instructing relevant hardware. The program may be stored in a computer readable storage medium. The storage medium may be a read-only memory, a magnetic disk, an optical disc, or the like.

A method and a terminal for controlling switching of a desktop container provided by the present invention are described in detail above, a person of ordinary skill in the art may change a specific implementation manner and application scope based on the idea of the embodiments of the present invention, in a word, this specification should not be regarded as a limitation on the present invention.

## Claims

1. A method for controlling switching of a desktop container, comprising:
obtaining, by a terminal, movement determination information when a component-based moving event is activated;
identifying, by the terminal, a movement state of the terminal according to the movement determination information; and
switching, by the terminal, a currently displayed desktop container page according to the movement state, and moving a component, on which the moving event is based, to a desktop container page displayed after the switching.

2. The method according to claim 1, wherein that the component-based moving event is activated comprises:
when any component which is touched and held for a time exceeding a preset time exists on the currently displayed desktop container page of the terminal, it is determined that the component-based moving event is activated;
or
when any component which is double-tapped exists on the currently displayed desktop container of the terminal, it is determined that the component-based moving event is activated.

3. The method according to claim 1 or 2, wherein the movement determination information comprises tilting radian information and acceleration information; and
the obtaining, by a terminal, movement determination information comprises:
obtaining, by the terminal, the tilting radian information by using a gyroscope sensor, wherein the tilting radian information is used to determine a current tilting radian of the terminal; and
obtaining, by the terminal, the acceleration information by using an acceleration sensor, wherein the acceleration information is used to correct the tilting radian information.

4. The method according to any one of claims 1 to 3, wherein the movement state of the terminal comprises left tilting restoration and right tilting restoration; and
the switching, by the terminal, a currently displayed desktop container page according to the movement state of the terminal comprises:
when the movement state of the terminal is the left tilting restoration, switching the currently displayed desktop container page of the terminal to an adjacent page in a preset direction; and
when the movement state of the terminal is the right tilting restoration, switching the currently displayed desktop container page of the terminal to an adjacent page in a direction opposite to the preset direction.

5. A terminal, comprising:
a movement determination information obtaining unit, configured to obtain movement determination information of the terminal when a component-based moving event is activated;
a movement state identifying unit, configured to identify a movement state of the terminal according to the movement determination information; and
a page switching unit, configured to switch a currently displayed desktop container page according to the movement state, and move a component, on which the moving event is based, to a desktop container page displayed after the switching.

6. The terminal according to claim 2, wherein the terminal further comprises:
a moving event activating unit, configured to: when any component which is touched and held for a time exceeding a preset time exists on the currently displayed desktop container of the terminal, determine that the component-based moving event is activated; or, when any component which is double-tapped exists on the currently displayed desktop container page of the terminal, determine that the component-based moving event is activated.

7. The terminal according to claim 5 or 6, wherein the movement determination information in the movement determination information obtaining unit comprises tilting radian information and acceleration information, and the movement determination information obtaining unit further comprises:
a tilting radian information obtaining unit, configured to obtain the tilting radian information by using a gyroscope sensor, wherein the tilting radian information is used to determine a current tilting radian of the terminal; and
an acceleration information obtaining unit, configured to obtain the acceleration information by using an acceleration sensor, wherein the acceleration information is used to correct the tilting radian information.

8. The terminal according to any one of claims 5 to 7, wherein the movement state of the terminal identified by the movement state identifying unit comprises left tilting restoration and right tilting restoration, and the page switching unit further comprises:
a first page switching subunit, configured to: when the movement state of the terminal is the left tilting restoration, switch the currently displayed desktop container page of the terminal to an adjacent page in a preset direction; and
a second page switching subunit, configured to: when the movement state of the terminal is the right tilting restoration, switch the currently displayed desktop container page of the terminal to an adjacent page in a direction opposite to the preset direction.
